# EUROPEAN PATENT SPECIFICATION

(11) **EP 0 705 532 B1**
(45) Date of publication and mention of the grant of the patent: **20.05.1998**
(21) Application number: 95830410.7
(22) Date of filing: 03.10.1995
(51) Int. Cl.: A01C 7/04

(54) **Pneumatic seeder with continiously rotating cylinder**
Pneumatische Sämaschine mit rotierender Trommel
Semoir pneumatique avec tambour tournant

(30) Priority: 03.10.1994 IT MI942012
(43) Date of publication of application: 10.04.1996
(73) Proprietor: ATLANTIC MAN S.r.l., Castelnovo Sotto (Reggio Emilia) (IT)
(72) Inventor: Carretti, Alfeo, I-Poviglio (Reggio Emilia) (IT); Lenzarini, Piercarlo, I-Reggio Emilia (IT)
(74) Representative: Adorno, Silvano

(56) References cited:
- DE-C- 681 295
- FR-A- 2 094 536
- US-A- 1 637 834
- US-A- 2 031 713

## Description

The present invention relates to an improved seeder with continuously rotating cylinder, of the type wherein an outer cylindrical surface of the cylinder partially draws from or is at least in contact along a generatrix thereof with a heap of seeds, a plurality of which is picked up in turns in a discrete way at certain generatrices of the cylinder, single seeds being distributed along said generatrix, evenly spaced, so as to be subsequently thrown in different and pre-established areas of seed-beds or seed sites, even of small or very small size.

It is known that the drawing of the seeds and their subsequent throwing is usually carried out in a pneumatic way, i.e. respectively by means of suction through radial aligned holes, arranged in parallel rows, on the outer surface of the cylinder and all communicating, for each row, with an air channel formed longitudinally within the thickness of the cylinder, which is in turn in communication with a vacuum source or pump during a pre-set arc of revolution and subsequently with a compressor, for the throwing by means of a jet of compressed air of the seeds which have been held by suction onto the respective holes until that moment. This must take place with an almost instantaneous switching action from the suction to the passage of compressed air, at a precise seed discharge or throwing area, so that the seeds exactly reach the respective intended positions.

It is apparent from the above that the size of the peripheral holes of the rotating cylinder must be strictly related to the size of the seeds used. In fact, the diameter of said holes must be smaller than the maximum cross-size of the seeds being used in order to prevent their suction inside the cylinder, but on the other hand the ratio between said two dimensions must not be too small otherwise the holding force exerted on the seeds through an insufficient suction section could not be high enough to have the single seeds remain on the mouth of the respective holes. Due to the criticalness of the size of the latter, prior art seeders require several cylinders having different diameters of the suction and discharge holes so as to replace them on the machine according to the type of seeds to be used, whose size changes significantly from a vegetal species to another. Therefore, this implies the need to make serious economical investments for each seeder, so as to have each time the cylinder suitable for the particular type of seed being used. Moreover, the replacement of the whole cylinder involves a certain waste of time by trained personnel, also considering that the required operations may be quite delicate, in particular as far as the coupling with the pneumatic distributor is concerned, the latter being quite complex in some types of known seeders, e.g. including rotating vanes and sometimes airtight inflated O-rings. Furthermore, this latter aspect is already a problem of known seeders by itself, regardless of the rotating cylinder replacement.

US-A-1637834 discloses a seed planter comprising a distributor provided with a series of seed pockets arranged circumferentially thereabout; a plurality of these circumferential series are of different size. A series of different sizes is spaced longitudinally the distributor for accommodating seeds of different size. The productivity of the seeder is consequently reduced. According to DE-C-681295 the distributing cylinders of a seeder are mounted on the machine frame in a replaceable manner to vary the distance between the rows of seeds.

It is an object of the present invention to provide an improved seeder which solves or at least reduces the above-mentioned problems and drawbacks of known seeders.

The seeder according to the present invention includes the novel features of claim 1 and thus allows the replacement, when needed, of only the tubular rods provided with the holes of the desired diameter and mounted in perimetral recesses formed in the cylinder, instead of the whole rotating cylinder.

In this way, the initial economical investment will be limited to the preparation of several series of polygonal tubular rods, instead of several complete cylinders, the rods of each series having holes of a diameter different from those of another series. Not only the room taken up in the warehouse will be small, but also the initial manufacturing costs of the whole machine will be lower than those of conventional machines, in that forming peripheral recesses of polygonal cross-section and tubular rods of corresponding cross-section with holes along one side, which are to be inserted within said recesses, involves a less complicated and therefore cheaper working than forming holes in communication with the respective inner channels directly along various generatrices of the cylinder.

Furthermore, the replacement will be simpler and quicker with no need for the use of skilled workers, in that it will be sufficient to slide the rods into the respective recesses on the side opposite to where there is the communication with the means for distributing suction and compressed air, which therefore are not involved in said operation.

According to a particular aspect of the present invention, there is also provided the formation of a distribution track which, by means of its rotating-bush packing, has advantageous characteristics of simplicity and tightness assurance.

These and other objects, advantages and characteristics of the seeder according to the present invention will be apparent to those skilled in the art from the following detailed description of a preferred embodiment thereof, reported as a non-limiting example, referring to the annexed drawings wherein:

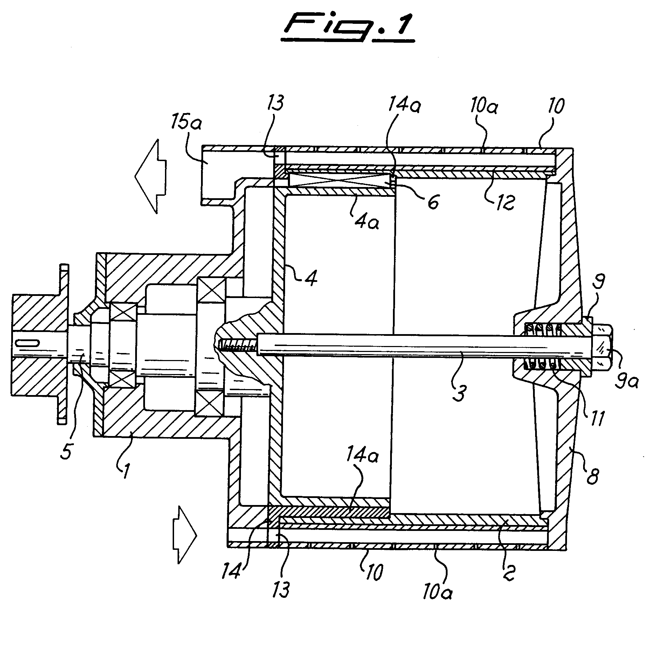

Fig.1 shows a schematic sectional view of a seeder according to the present invention; and
Fig.2 shows an exploded perspective view of the seeder of fig.1.

With reference to the figures, the seeder according to the invention substantially includes a cylinder 2, preferably made from a light metal such as aluminum, which is rotatably mounted on a frame 1 by means of a cantilever shaft 3. The cylinder 2 is driven into rotation around shaft 3 by a hollow end 4 of a drive shaft 5, for example by means of a key 6 which makes the cylinder 2 integral with a portion 4a of the hollow shaft 4 directed parallel to the axis and extending for a certain length along the inner wall of the cylinder. The motion of the latter in the axial direction is prevented, on one side, by a front flange or head 7 integral with frame 1, and on the other side by a cap 8 locked onto shaft 3 by a bolt 9 with a nut 9a. A spring 11 coaxial with shaft 3, and housed within a seat formed in cap 8 between the latter and the inner end of bolt 9, biases the opposite end of cylinder 2 against flange 7, with a force which can be adjusted through nut 9a.

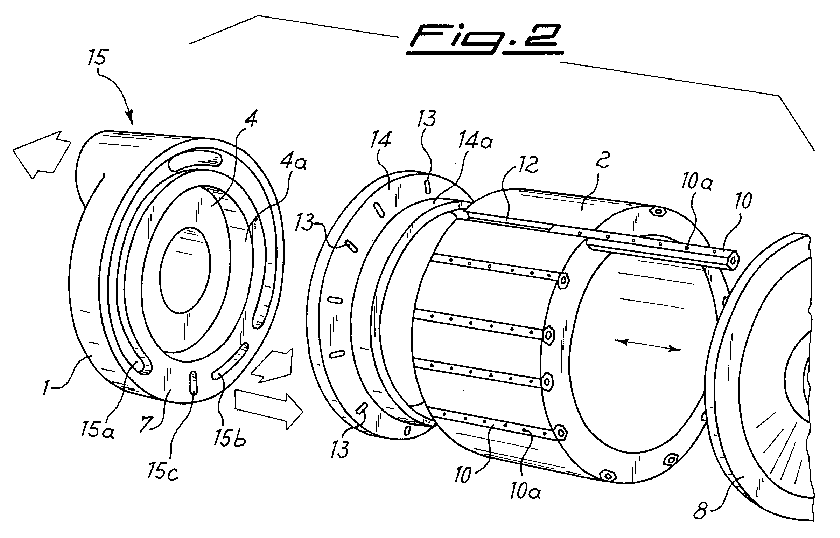

According to the present invention, the curved surface of cylinder 2 has parallel peripheral longitudinal recesses 12 extending between the ends of the cylinder along equally spaced generatrices of the cylinder. Said recesses are in communication with the outside and have a polygonal cross-section, so as to allow the insertion into each of them of a tubular metal rod 10, of corresponding cross-section and length equal to the cylinder length, through a coupling by axial sliding, with very small transverse play. Each rod 10, for example made of brass, has a certain number of small holes 10a equally spaced lengthwise and all in communication with the hollow inside of the tubular rod 10. Obviously, rods 10 must be inserted in the respective recesses 12 so that the side with the holes 10a is facing outwards. This side will preferably be the only side in contact with the outside, machined so as to be perfectly level with the adjacent surface of cylinder 2, with no discontinuities and edges, thus having the same curvature of the lateral curved surface of the cylinder. Preferably, the tubular rods 10 and the respective housing recesses 12 have a hexagonal cross-section, in that it has been found that the hexagon is a very good compromise between a number of sides sufficient to prevent possible slipping out of the recess (such as for example in the case of a square) and a too high number of sides which would imply sides of too small width and therefore excessively closed recesses in order to avoid having also an edge in contact with the outside, which should then be machined to take it level with the adjacent surface. As it can be better seen in the exploded view of fig.2, wherein a longitudinal rod 10 is shown partially extracted from its recess, a front-packing bush 14, made of anti-friction material, is provided between cylinder 2 and the distribution flange 7, fixed to the end of cylinder 2 facing frame 1, a portion 14a of which, coaxial with shaft 3, is inserted between the inner surface of the cylinder and the coaxial portion 4a of the rotating drive shaft. In this way, the ends of recesses 12 and the respective tubular rods 10 on the side of flange 7 come in contact during the rotation, through corresponding slots 13 formed in packing 14, with one portion or the other of a peripheral track 15 formed on flange 7. This track includes a greater portion 15a, however along an arc of more than 180°, in communication with a suction system, such as a pump (not shown); a much shorter portion 15b is in communication with a source of compressed air (e.g. a compressor) to produce the jet of air suitable to throw away the seeds adhering to holes 10a. Subsequently, after portion 15b and before the beginning of the suction portion 15a, a still shorter length of track 15c can be provided, also connected to the source of compressed air, for the production of a still shorter jet for cleaning holes 10a prior to the following suction. The distance between the end of portion 15a and the beginning of portion 15b will be as small as possible, however greater than the diameter of any of slots 13, so as to keep the suction and pressurisation portions always separated.

With reference to the description above, the operation of the machine, in its essential aspects, can be summarised as follows. Each time that a different diameter of the suction holes 10a is required for the size of the seeds making up the charge to be used for the seeding, the machine is opened by unscrewing bolt 9 through its nut so as to be able to remove cap or head 8 from cylinder 2. In this way, the hollow rods 10 can be extracted from the respective housings 12, possibly after having also moved cylinder 2 away from the contact with flange 7 since spring 11 does not bias any more and the cylinder can slide axially along key 6 connecting it to the hollow drive shaft 4. When all recesses 12 are empty, rods 10 can be inserted therein, of a previously stored different series, with holes 10a having the diameter required for the seeds to be used now. The sliding introduction is carried out being careful to have the perforated side of rods 10 facing outwards, whereafter the mounting of cylinder 2 is carried out by performing in the reverse order the operations described above for the dismounting. At this time the machine is ready to be operated again with no need to intervene on the distribution system, in that the entrance ends of the rods will be automatically airtightly located, under the bias of spring 11, against track 15 for the distribution of the (sucked or compressed) air through the packing bush 14 and the corresponding slots 13. Only in the case that the angular position of the seed picking and/or discharging portions is to be changed, an intervention on flange 7 is required to vary the orientation of track 15 or to modify the latter.

Therefore, there are apparent advantages with respect to the prior art, which required each time the complete replacement of the whole cylinder and gave rise to serious trouble as far as the connections to the air distribution system are concerned.

## Claims

1. A seeder with continuously rotating cylinder (2) of the type wherein an outer cylindrical surface of the cylinder (2) partially draws from or is at least in contact along a generatrix thereof with a heap or collection of seeds, a plurality of which is pneumatically picked up in turns in a discrete way at certain generatrices of the cylinder, single seeds being distributed along said generatrix, so as to be subsequently pneumatically thrown in different and pre-established areas of seed-beds or seed sites, said cylinder (2) being rotatably mounted on a frame (1) through a cantilever shaft (3), one side of the frame (1) being provided with drive shaft means (5) and a distribution flange (7), facing a first end of said cylinder (2), suitable to communicate with a suction source and respectively a source of compressed air, characterized in that the curved surface of said cylinder (2) has parallel peripheral longitudinal recess (12) in communication with the outside, extending along equally spaced generatrices of the cylinder (2) and having polygonal cross-section, a tubular rod (10) also having a polygonal cross-section corresponding to that of the respective recess being housed by sliding coupling into each of said recesses (12), the outer surface of said rods (10) being level with the outer curved surface of the cylinder and radiused thereto, and having a series of holes (10a) communicating with the outside and the recess, said holes being equally spaced in the longitudinal direction, said flange (7) being the member which distributes the suction and respectively the compressed air entering the hollow rods (10) at said first end of the cylinder (2).

2. A seeder according to claim 1, characterized in that said drive shaft (5) transmits the rotation to said cylinder (2) through a hollow end (4) having a cylindrical portion (4a) coaxial with said rotation shaft (3) and suitable to engage the inner surface of the cylinder for driving it into rotation by means of a longitudinal key (6).

3. A seeder according to claim 2, characterized in that a front packing bush (14) of anti-friction material is fixed to said first end of the cylinder (2), said bush having a substantially tubular portion (14a) coaxial with the shaft (3) and being provided with front holes (13) corresponding to said recesses (12) so as to put them in communication with said distribution flange (7).

4. A seeder according to claim 2 or 3, characterized in that at the end of the cylinder (2) opposite to said first end a front cover member (8) is provided suitable to be locked on the rotation shaft (3) by fastening means (9, 9a), elastic means (11) being provided for biasing the cylinder (2) together with said packing bush (14) against said flange (7).

5. A seeder according to claim 1, characterized in that said flange (7) is the member which distributes the suction and respectively the compressed air entering the hollow rods (10) at said first end of the cylinder (2), the flange having along its contour a peripheral track (15a) extending along an arc greater than 180° and connected to an external suction source, and one or more separate portions (15b, 15c) extending much less than the track (15a) and connected to an external source of compressed air.

6. A seeder according to claims 3 and 5, characterized in that the distance between the beginning of a first portion (15b) supplied with compressed air and the end of said suction portion (15a) is as small as possible, but at least equal to the diameter of said holes (13).

## Patentansprüche

1. Pneumatische Sävorrichtung mit einem kontinuierlich sich drehenden Zylinder (2), die teilweise abzieht von oder wenigstens in Berührung steht entlang einer Erzeugenden mit einer Anhäufung oder einer Sammlung von Samen, von denen eine Anzahl der Reihe nach pneumatisch einzeln durch bestimmte Erzeugende des Zylinders aufgenommen wird, wobei einzelne Samen entlang der Generatrix verteilt werden, so daß sie anschließend pneumatisch in unterschiedliche und vorbereitete Bereiche des Saatbettes oder Saatbeetes ausgeworfen werden, welcher Zylinder (2) drehbar an einem Rahmen (1) mit Hilfe einer auskragenden Achse montiert ist, wobei eine Seite des Rahmens (1) mit einer Antriebswelle (5) und einem Verteilerflansch (7) versehen ist, der an dem ersten Ende des Zylinders (2) gegenüberliegt, derart, daß er mit der Unterdruckquelle und einer Druckluftquelle in Verbindung steht, dadurch **gekennzeichnet,** daß die gekrümmte Oberfläche des Zylinders (2) parallele, auf dem Umfang liegende, linksgerichtete Ausnehmungen (12) in Verbindung mit der Außenseite aufweist, die sich entlang der in gleichen Abständen liegenden Erzeugenden des Zylinders (2) erstrecken und einen polygonalen Querschnitt aufweisen, daß eine rohrförmige Stange (10), die ebenfalls einen polygonalen Querschnitt entsprechend demjenigen der Ausnehmungen aufweist, in jeder der Ausnehmungen (12) über eine Gleitkupplung angeordnet ist, daß die äußere Oberfläche der Stangen (10) mit der äußeren gekrümmten Oberfläche des Zylinders fluchtet und an dessen Radius angepaßt ist und eine Anzahl von mit der Außenseite und der Ausnehmung in Verbindung stehenden Bohrungen (10a) aufweist, die in gleichmäßigem Abstand in Längsrichtung verteilt sind, welcher Flansch (7) dasjenige Teil ist, das den Unterdruck und die Druckluft verteilt, die in hohlen Stangen (10) am ersten Ende des Zylinders (2) eintritt.

2. Pneumatische Sävorrichtung nach Anspruch 1, dadurch **gekennzeichnet,** daß die Antriebswelle (5) die Drehung des Zylinders (2) über ein hohles Ende (4) mit einem zylindrischen Abschnitt (4a) koaxial zu der drehbaren Welle (3) und geeignet zum Erfassen der inneren Oberfläche des Zylinders zum Antreiben des Zylinders in Drehrichtung mit Hilfe eines längsgerichteten Keils (6) überträgt.

3. Pneumatische Sävorrichtung nach Anspruch 2, dadurch **gekennzeichnet,** daß eine vordere Stopfbuchse aus reibungsfreiem Material an dem ersten Ende des Zylinders (2) angebracht ist, daß die Buchse einen im wesentlichen rohrförmigen Abschnitt (14a) koaxial zu der Achse (3) aufweist, die mit vorderen Bohrungen (13) entsprechend den Ausnehmungen (12) versehen ist, so daß diese in Verbindung gebracht werden mit dem Verteilungsflansch (7).

4. Pneumatische Sävorrichtung nach Anspruch 2 oder 3, dadurch **gekennzeichnet,** daß dem Ende des Zylinders (2) gegenüber dem ersten Ende ein vorderer Deckel (8) vorgesehen ist, der geeignet ist zur Befestigung auf der drehbaren Achse (3) mit Hilfe von Befestigungseinrichtungen (9,9a), wobei elastische Mittel (11) vorgesehen sind zum Vorspannen des Zylinders (2) zusammen mit der Stopfbuchse (14) gegen den Flansch (7).

5. Pneumatische Sävorrichtung nach Anspruch 1, dadurch **gekennzeichnet,** daß der Flansch (7) das Bauteil ist, das den Sog und die Druckluft verteilt, die in die hohlen Stangen (10) am ersten Ende des Zylinders (2) eintritt, daß der Flansch entlang seiner Kontur eine Umfangsspur (15a) aufweist, die sich entlang einem Bogen von mehr als 180 Grad erstreckt und verbunden ist mit einer externen Unterdruckquelle, und daß ein oder mehrere Abschnittbereiche (15b,15c) vorgesehen sind, die sich über einen wesentlich kürzeren Bereich als die Spur (15a) erstrecken und mit einer äußeren Druckluftquelle verbunden sind.

6. Pneumatische Sävorrichtung nach Anspruch 3 und 5, dadurch **gekennzeichnet,** daß der Abstand zwischen dem Anfang des ersten Bereichs (15b), der mit Druckluft versorgt wird, und dem Ende des Saugbereichs (15a) möglichst klein ist, jedoch wenigstens gleich dem Durchmesser der Bohrungen (13) ist.

## Revendications

1. Semoir avec un tambour (2) tournant de manière continue du type dans lequel une surface cylindrique extérieure du tambour (2) retire partiellement d'un tas ou ensemble de graines, ou est au moins en contact le long de l'une de ses génératrices avec ce tas ou ensemble, dont une série est prélevée pneumatiquement tour à tour, en étant séparés à certaines génératrices du tambour, les graines étant distribuées une par une le long de cette génératrice, de manière à être projetées pneumatiquement à la suite dans des zones différentes et pré-établies de couches ou sites de graines, le tambour (2) étant monté à rotation sur un châssis (1) par l'intermédiaire d'un arbre en porte-à-faux (3), l'un des côtés du châssis (1) étant muni de moyens d'entraînement (5) et d'un flasque de distribution (7), faisant face à l'une des extrémités du tambour (2), propre à communiquer avec une source d'aspiration et respectivement une source d'air comprimé, caractérisé en ce que la surface courbe du tambour (2) présente des évidements longitudinaux périphériques parallèles (12) en communication avec l'extérieur, s'étendant le long de génératrices du tambour (2) espacées de manière égale et ayant une section transversale polygonale, une tige tubulaire (10) ayant une section transversale polygonale correspondant à celle de l'évidement correspondant étant logée dans chacun des évidements (12) de manière à pouvoir y coulisser, la surface extérieure des tiges (10) étant au niveau de la surface extérieure courbe du tambour et disposée suivant des rayons, et comportant une série de trous (10a) communiquant avec l'extérieur et avec l'évidement, ces trous étant régulièrement espacés dans la direction longitudinale, le flasque (7) étant l'élément qui distribue respectivement l'aspiration et l'air comprimé entrant dans les tiges creuses (10) à ladite première extrémité du tambour (2).

2. Semoir selon la revendication 1, caractérisé en ce que l'arbre d'entraînement (5) transmet la rotation au tambour 2 par l'intermédiaire d'une extrémité creuse (4) comportant une portion cylindrique (4a) coaxiale à l'arbre de rotation (3) et propre à coopérer avec la surface intérieure du tambour pour l'entraîner en rotation au moyen d'une clavette (6).

3. Semoir selon la revendication 2, caractérisé en ce qu'un manchon de garniture avant (14) en une matière anti-friction est fixé à ladite première extrémité du tambour (2), ce manchon présentant une portion sensiblement tubulaire (14a) coaxiale à l'arbre (3) et munie de trous avant (13) correspondant aux évidements (12) de manière à les mettre en communication avec le flasque de distribution (7).

4. Semoir selon la revendication 2 ou 3, caractérisé en ce qu'à l'extrémité du tambour (2) opposé à ladite première extrémité est prévu un couvercle (8) propre à être bloqué sur l'arbre de rotation (3) par des moyens de fixation (9-9a), des moyens élastiques (11) étant prévus pour presser le tambour (2) avec le manchon de garniture (14) contre le flasque (7).

5. Semoir selon la revendication 1, caractérisé en ce que le flasque (7) est l'élément qui distribue l'aspiration et respectivement l'air comprimé entrant dans une tige creuse (10) à ladite première extrémité du tambour (2), le flasque comportant le long de son contour un passage périphérique (15a) s'étendant suivant un arc supérieur à 180° et relié à une source d'aspiration externe et une ou plusieurs portions séparées (15b-15c) s'étendant beaucoup moins que le passage (15a) et connectées à une source externe d'air comprimé.

6. Semoir selon les revendications 3 et 5, caractérisé en ce que la distance entre le début d'une première portion (15b) alimentée en air comprimé et l'extrémité de la portion d'aspiration (15a) est aussi faible que possible, mais au moins égale au diamètre des trous (13).
